# EUROPÄISCHE PATENTSCHRIFT

(11) **EP 3 788 917 B1**
(45) Veröffentlichungstag und Bekanntmachung des Hinweises auf die Patenterteilung: **06.10.2021**
(21) Anmeldenummer: 20192192.1
(22) Anmeldetag: 21.08.2020
(51) Int. Cl.: A47J 31/44, A47J 31/46

(54) **GETRÄNKEZUBEREITUNGSVORRICHTUNG MIT MILCHSYSTEM**
BEVERAGE PREPARATION DEVICE WITH MILK SYSTEM
DISPOSITIF DE PRÉPARATION DES BOISSONS POURVU DE SYSTÈME DE LAIT

(30) Priorität: 03.09.2019 DE 102019123590
(43) Veröffentlichungstag der Anmeldung: 10.03.2021
(73) Patentinhaber: FRANKE Kaffeemaschinen AG, 4663 Aarburg (CH)
(72) Erfinder: MUELLER, Simon, 5037 Muhen (CH)
(74) Vertreter: Lemcke, Brommer & Partner Patentanwälte Partnerschaft mbB

(56) Entgegenhaltungen:
- EP-A1- 2 583 596
- WO-A1-2019/072583

## Beschreibung

Die Erfindung betrifft eine Getränkezubereitungsvorrichtung, insbesondere zur Zubereitung von Kaffee-, Tee- oder Milchgetränken, mit einem Milchsystem zur Ausgabe von Milch und/oder Milchschaum und mit einer Steuereinheit zur Steuerung der Getränkezubereitungsvorrichtung für eine portionsweise Getränkeausgabe, wobei das Milchsystem eine mit dem Milchbehälter verbindbare Förderleitung und eine an die Förderleitung angeschlossene Milchpumpe aufweist.

Ferner betrifft die Erfindung ein Verfahren zur Zubereitung eines Getränks, insbesondere Kaffee-, Tee- oder Milchgetränks, bei dem eine portionsweise Getränkeausgabe in ein Trinkgefäß erfolgt und dem Getränk Milch und/oder Milchschaum zugegeben wird, indem aus einem Milchbehälter über eine Förderleitung Milch in Richtung eines Getränkeauslasses gefördert wird.

Getränkezubereitungsvorrichtungen zur automatischen Zubereitung und Ausgabe von Kaffeegetränken, sogenannte Kaffeevollautomaten, sind aus dem Stand der Technik bekannt. Meist weisen diese ein Milchsystem auf, mit dem Milch aus einem Milchbehälter gefördert und den frisch zubereiteten Getränken als Milch oder Milchschaum zugegeben werden kann. Um eine gleichbleibende Qualität des zubereiteten Getränks zu gewährleisten, muss die ausgegebene Milchmenge dabei von Ausgabe zu Ausgabe auf eine rezeptgemäße Nennmenge dosiert sein. Dies wird in bekannten Getränkezubereitungsvorrichtungen dadurch erreicht, dass eine Milchpumpe zur Förderung der Milch im Milchsystem für eine konstante Zeitdauer eingeschaltet wird, in der ein definiertes Milchvolumen gefördert wird. Die Dosierung der Milchmenge über die Pumpenförderzeit ist jedoch ungenau und verschiedenen externen Einflüssen unterworfen. So kann die Pumpleistung von der Viskosität und damit der Sorte der verwendeten Milch abhängen. Außerdem kann sich mit zunehmender Betriebszeit der Wirkungsgrad der Milchpumpe ändern, sodass sich die über eine konstante Einschaltzeit geförderte Milchmenge mit der Zeit ändern kann. Schließlich kann bei der Zubereitung und Ausgabe von Milchschaum saugseitig der Milchpumpe Luft zugeführt werden. Die Schaumbildung hat hierbei wiederum großen Einfluss auf die pro Zeiteinheit geförderte Milchmenge und hängt nicht nur von der Milchsorte sondern auch der Milchtemperatur, dem Druck in der Pumpe und der zugeführten Luftmenge ab.

Die Druckschrift WO 2019/072583 A1 offenbart eine Getränkezubereitungsvorrichtung, mit einem Milchsystem zur Ausgabe von Milch und/oder Milchschaum und mit einer Steuereinheit 50 zur Steuerung der Getränkezubereitungsvorrichtung für eine portionsweise Getränkeausgabe, wobei das Milchsystem eine mit einem Milchbehälter 14 verbindbare Förderleitung und eine an die Förderleitung angeschlossene Milchpumpe 10 aufweist, wobei in der Förderleitung ein erster Durchflussmesser 16 angeordnet ist, welcher zur Dosierung des von der Milchpumpe geförderten Milchvolumens mit der Steuereinheit signaltechnisch verbunden ist, wobei die Getränkezubereitungsvorrichtung ein Wasserfördersystem zur Förderung von Frischwasser und/ oder Heißwasser aufweist und das Wasserfördersystem einen zweiten Durchflussmesser 43 zur Volumenbestimmung von dem Wasserfördersystem geförderten Wassers aufweist. Der Erfindung liegt deshalb die Aufgabe zugrunde, eine Getränkezubereitungsvorrichtung und ein entsprechendes Verfahren anzugeben, welche eine genauere Portionierung der geförderten Milchmenge ermöglichen.

Die Aufgabe wird hinsichtlich der Getränkezubereitungsvorrichtung gelöst durch die Merkmale des Anspruchs 1 und hinsichtlich des Verfahrens durch die Merkmale des Anspruchs 7. Vorteilhafte Ausgestaltungen sind den abhängigen Ansprüchen zu entnehmen.

Bei einer Getränkezubereitungsvorrichtung der eingangs genannten Art ist ein Durchflussmesser vorgesehen, insbesondere ein mechanischer Durchflussmesser, der in einer Förderleitung eines Milchsystems angeordnet ist und das geförderte Milchvolumen erfasst, sobald er von der Milch durchströmt wird. Der Durchflussmesser gibt seine Messsignale an eine Steuereinheit aus, mit der die Dosierung des geförderten Milchvolumens gesteuert wird.

Erfindungsgemäß dient die Getränkezubereitungsvorrichtung der Zubereitung von Getränken, bei denen Milch entweder als Zugabe oder als Hauptbestandteil eines Getränks verwendet wird. Der Begriff Milch beschränkt sich dabei nicht nur auf die Milch von Kühen oder anderen domestizierten Tieren, sondern umfasst ebenso nicht tierische Milchalternativen wie Hafermilch, Reismilch, Sojamilch, Mandelmilch oder andere milchartige Flüssigkeiten.

Das Milchsystem dient der Ausgabe der Milch und/oder Milchschaum bei der Zubereitung von Getränken. Dafür umfasst das Milchsystem neben Fluidleitungen auch steuer- und/oder regelbare Komponenten, die die Förderung, Behandlung und Dosierung von Milch erlauben.

Eine milchführende Förderleitung ist über einen Anschluss der Getränkezubereitungsvorrichtung mit einem Milchbehälter verbindbar. Die lösbare Verbindung zwischen Förderleitung und Milchbehälter kann sowohl durch einen dichtenden Verschluss als auch einen Schraubverschluss, Bajonettverschluss oder Klickverschluss im Anschlussmodul realisiert werden, aber auch durch nicht dichtende fluidleitende Verbindungen, wie etwa eine Milchlanze, die in einen Milchbehälter eingesteckt bzw. eingetaucht wird. Zudem können am Anschluss Ventilkomponenten vorgesehen sein, die einen Rückfluss von Milch in den Milchbehälter verhindern, z.B. wenn nach Abschalten der Milchpumpe der Förderdruck zusammenfällt.

Eine Milchpumpe dient zum Fördern von Milch aus dem Milchbehälter durch eine Förderleitung und der Ausgabe von Milch durch eine Ausgabeleitung. Darüber hinaus kann die Milchpumpe derart ausgestaltet sein, dass Milchschaum unter anderem durch sie erzeugt wird oder die Erzeugung von Milchschaum durch die Pumpe begünstigt wird. In diesem Sinne beschränkt sich der Begriff Pumpe nicht auf die Förderung von inkompressiblen oder nahezu inkompressiblen Medien wie Milch, sondern kann durch bevorzugte Pumpenbauformen wie Zahnradpumpen dazu verwendet werden, die Milch zu behandeln. Grundsätzlich kann die Milchpumpe als Strömungspumpe, Verdrängerpumpe oder auch als Strahlpumpe ausgeführt sein.

Der in der Förderleitung angeordnete Durchflussmesser dient der Bestimmung des Durchflussvolumens von Milch in der Förderleitung. Dies betrifft den momentanen Durchfluss aber auch das gesamte Milchvolumen über die Dauer einer oder mehrerer Ausgaben von Milch oder Milchschaum. Als Durchflussmesser kann ein Messaufnehmer verstanden werden, der mit einem Messumformer wirkverbunden ist, allerdings gemeinsam oder getrennt von diesem ausgeführt sein kann. Der Messumformer kann mit einer Steuereinheit energietechnisch verbunden sein oder eine eigenständige Energieversorgung aufweisen. Darüber hinaus findet eine signaltechnische Kommunikation zwischen Messaufnehmer und der Steuereinheit kabelgebunden oder kabellos statt.

Der Durchflussmesser erfasst ein Durchflussvolumen in der Förderleitung, indem das Gesamtvolumen oder ein Teilvolumen des Milchstroms, bezogen auf den Querschnitt der Förderleitung, den Messaufnehmer des Durchflussmessers ganz oder teilweise durchströmt. Die Durchflussmenge wird indirekt ermittelt, indem das Durchströmen mindestens einen Betriebsparameter des Messaufnehmers derart beeinflusst, dass dieser einem Volumen zugeordnet werden kann. Betriebsparameter sind dabei insbesondere mechanische Kenngrößen, wie die Drehzahl/Drehbeschleunigung einer oder mehrerer rotierender Komponenten oder auch die Geschwindigkeit/Beschleunigung einer oder mehrerer linear bewegten Komponenten des Durchflussmessers. Die mechanische Kenngröße wird durch den Messumformer erfasst und in ein oder mehrere elektrische Signale gewandelt, durch die die Zuordnung zwischen oben genanntem Betriebsparameter und einem Volumen erfolgt.

Der Messumformer kann Bauelemente und Funktionen umfassen, mit denen das Signal des Messumformers zusätzlich verstärkt oder verarbeitet werden kann, bevor es an eine Steuereinheit kommuniziert wird. Die Verarbeitung kann dabei ein Vorverarbeitungsschritt für die Steuereinheit sein, indem das Signal analog oder digital zur Steigerung der Messgenauigkeit gefiltert wird. Die Verarbeitung kann jedoch auch einzelne oder alle Schritte zur Berechnung eines Volumens je Zeiteinheit oder Zeitintervall beinhalten. Dabei können die gemessenen Signale mit einer Zeiteinheit oder Zeitintervall ins Verhältnis gesetzt werden und damit einen Volumenstrom repräsentieren. Die Zuordnung der Signale je Zeiteinheit zu einem entsprechenden Volumenstrom kann bereits durch den Hersteller des Durchflussmessers erfolgen oder im Betrieb im Rahmen von Abgleichvorgängen durch Referenzmessungen. Diese werden im weiteren Verlauf der Beschreibung näher erläutert.

Die Signale werden vom ersten Durchflussmesser an die Steuereinheit kommuniziert, welche den Betrieb der Getränkezubereitungsvorrichtung steuert. Die Steuereinheit ist eine elektrisch wirkende Signalverarbeitungseinheit, die Signale empfängt und/oder ausgibt, anhand derer eine portionsweise Getränkeausgabe erfolgt. Eingehende Signale können Spannungen oder Ströme sein, die vom Durchflussmesser, anderen Sensoren oder weiteren, sekundären Steuereinheiten ausgegeben werden. Durch die Ausgabe von Signalen der Steuereinheit können die Ströme eines Motors geregelt werden, mit dem die Milchpumpe angetrieben wird und/oder fluidsteuernde Komponenten des Milchsystems aktuiert werden, die die Förderung des Milchflusses beeinflussen oder seine Ausgabe unterbrechen. Die Steuereinheit kann ebenso als Kontrolleinheit ausgeführt sein, welche neben einer reinen Steuerung auch eine Regelung des Milchflusses ermöglicht. Die Regelung kann dabei mit verschiedenen Regelparametern oder -zyklen erfolgen, die sowohl eine dynamische Flussregelung als auch eine anpassbare Dosierung von Milch oder Milchschaum von Ausgabe zu Ausgabe erlaubt.

Im Rahmen der Erfindung weist die Vorrichtung außerdem ein Wasserfördersystem auf, mit dem Wasser zur Getränkezubereitung direkt aus einem Wasserhahn, einem Wassertank oder anderen Speichern gefördert werden kann. Im Wasserfördersystem befindet sich ein zweiter Durchflussmesser, mit dem das Volumen des geförderten Wassers gemessen werden kann. Die Messung erfolgt dabei analog zu den Ausführungen des ersten Durchflussmessers. Die verwendeten Arten des ersten und des zweiten Durchflussmessers können sich in ihren Ausführungen allerdings unterscheiden. Insbesondere kann dies der Fall sein, wenn die Durchflussmengen in der Förderleitung des Milchsystems und einer Leitung des Wasserfördersystems sich derart unterscheiden, dass Durchflussmesser für unterschiedliche Nenndurchsätze individuell dimensioniert werden müssen. Außerdem können die Durchflussmesser unterschiedlich hohen Drücken ausgesetzt sein, die eine entsprechende Festigkeit der Komponenten erfordern. Die Kosten der Durchflussmesser können bei Ihrer Wahl ebenso ein Auswahlkriterium darstellen.

Die Getränkeausgabevorrichtung kann einen Spülvorgang durchführen, mit dem die Leitungen der Getränkeausgabevorrichtung mit einem Wasserfluss durchströmt werden können. Dafür wird ein erstes Spülventil im Wasserfördersystem angesteuert, das das Wasserfördersystem mit dem Milchsystem verbindet. Dadurch werden der erste und der zweite Durchflussmesser hydraulisch in Reihe geschaltet. Dies bedeutet, dass Wasser während einer Spülung sowohl durch das Milchsystem als auch durch das Wasserfördersystem gefördert wird und sowohl erster als auch zweiter Durchflussmesser von demselben Wasserstrom durchströmt werden. Dadurch können Milch oder Rückstände von Milch aus Teilen der Vorrichtung entfernt werden, mit denen sie zuvor in Kontakt standen.

Untersuchungen der Anmelderin haben gezeigt, dass die Messung von Milchströmen mit zunehmender Betriebsdauer des Durchflussmessers Messabweichungen aufweist, die sich insbesondere in Form systematischer Abweichungen äußern können. Um diesem Problem zu begegnen ist es den Erfindern erstaunlicherweise gelungen, derartige Messabweichungen zu kompensieren, ohne den Aufbau oder die Wirkweise des ersten Durchflussmessers verändern zu müssen. Dabei wird eine nachhaltig hohe Messgenauigkeit des ersten Durchflussmessers erreicht, indem der Spülvorgang der Getränkezubereitungsvorrichtung zu einem messtechnischen Abgleich genutzt wird, bei dem Messabweichungen kompensiert werden können. Dabei wird während des Spülvorgangs die geförderte Wassermenge infolge der hydraulischen Reihenschaltung sowohl durch den ersten als auch durch den zweiten Durchflussmesser gemessen. Die dabei erhobenen Messwerte beider Durchflussmesser werden an die Steuereinheit kommuniziert, welche die Messwerte dafür nutzt, einen messtechnischen Abgleich des ersten Durchflussmessers auf die Messwerte des zweiten Durchflussmessers durchzuführen. Dabei wirkt der zweite Durchflussmesser als Referenzmessgerät und der erste Durchflussmesser als das Messsystem, das mit den Messwerten des Referenzmessgerätes abgeglichen wird.

Der Abgleich basiert auf der Erkenntnis der Erfinder, dass die Messwerte des zweiten Durchflussmessers im Vergleich zum ersten Durchflussmesser über die Betriebszeit der Getränkezubereitungsvorrichtung vernachlässigbar geringen Abweichungen unterworfen sind, während sich das Messverhalten des ersten Durchflussmessers mit der Zeit ändert. Möglicher Grund hierfür ist, dass der zweite Durchflussmesser vorrangig mit Wasser in Berührung kommt und sich daher im Gegensatz zum ersten Durchflussmesser, der vorrangig mit Milch in Berührung kommt, seltener und mit weniger aggressiven Mitteln gereinigt werden muss. Die Veränderung des Messverhaltens des ersten Durchflussmessers hingegen mag seine Ursache in mikroskopischen Anhaftungen von Milch- oder Milchreiniger-Bestandteilen haben, die einen Einfluss auf die Leichtgängigkeit beweglicher Teile des Durchflussmessers haben. Außerdem werden zur Getränkezubereitung Milch und Wasser nicht notwendigerweise in den gleichen Volumina gefördert, weswegen die Durchflussmesser gegebenenfalls auf unterschiedliche Durchsätze zu dimensionieren sind. Damit gehen unterschiedliche Lebensdauern der Komponenten einher, die mit entsprechend unterschiedlichen Verschleißerscheinungen verbunden sind. Diese können durch die Förderung von Milch zusätzlich verfrüht auftreten.

Misst der zweite Durchflussmesser während des Spülvorgangs eine oder mehrere Mengen Wasser, so werden die elektrischen Signale des ersten Durchflussmessers, der dieselbe Menge Wasser misst, einem bekannten Durchflussvolumen zugeordnet und diese Zuordnung für den weiteren Messbetrieb bei der Dosierung verwendet. In der einfachsten Anwendungsform kann für den ersten Durchflussmesser ein linearer Zusammenhang zwischen einer Anzahl an gemessenen Signalimpulsen zu einem geförderten Volumen aufgestellt werden. Dabei kann eine erste Anzahl an Signalimpulsen, die gleich null ist und ein erstes Volumen gleich null gemeinsam einen Punkt einer Geraden in einem geeigneten Koordinatensystem darstellen. Ein zweiter Punkt kann gebildet werden durch eine zweite Anzahl am Signalimpulsen ungleich null und einem durch den zweiten Durchflusssensor ermittelten zweiten Volumen ungleich null. Werden mehrere Messungen jeweils unterschiedlicher Volumina durchgeführt, können die Zusammenhänge nicht nur linear sondern polynomiell sein oder sich durch mehrere Funktionsgleichungen oder numerische Zusammenhänge abbilden lassen.

Durch den Abgleich können Messunsicherheiten in der Volumenmessung von Milch, die durch die Messgenauigkeit des ersten Durchflussmessers bedingt sind, kompensiert werden und die Absolutgenauigkeit und/oder die Wiederholgenauigkeit gesteigert werden. Während eines Spülvorganges können auch einzelne Ströme verschiedener Volumina gefördert und gemessen werden, wodurch eine Feststellung von Linearitätsabweichungen des ersten Durchflussmessers ermöglicht wird.

In einer weiteren vorzugsweisen Ausgestaltung der Vorrichtung ist der erste Durchflussmesser ein Turbinenrad-Durchflussmesser. Die Wirkweise des Turbinenrad-Durchflussmessers basiert auf einer axialen Anströmung eines Turbinenrades durch das zu messende Fluid, bei der dieses in eine rotatorische Bewegung versetzt wird. Bei zunehmender Strömungsgeschwindigkeit nimmt die Drehzahl des Turbinenrades zu. Durch ein bekanntes Verhältnis aus Drehzahl zu Strömungsgeschwindigkeit lässt sich das Durchflussvolumen bestimmen, indem die Bewegung des Turbinenrades durch den Messumformer erfasst wird. Eine Übersetzung oder Untersetzung der Geschwindigkeit kann dazu genutzt werden, um die Auflösung des Messsystems zu steigern. Nach überraschender Erkenntnis der Erfinder zeigt ein Turbinenrad-Durchflussmesser im Gegensatz zu anderen Durchflussmessern, insbesondere den am häufigsten eingesetzten Flügelradzählern, im Kontakt mit Milch und/oder Milchreiniger nur eine sehr geringe Veränderung seines Messverhaltens über die Betriebszeit der Getränkezubereitungsvorrichtung, was ihn besonders geeignet für die Verwendung im Milchsystem macht.

Als zweiter Durchflussmesser wird in einer bevorzugten Ausführungsform dagegen ein herkömmlicher Flügelrad-Durchflussmesser verwendet. Die Wirkweise des Flügelrad-Durchflussmessers basiert auf einer radialen Anströmung eines Flügelrades das in eine rotatorische Bewegung versetzt wird. Die Erfassung der Durchflussmenge erfolgt analog zu den Ausführungen des Turbinenradzählers. Bauart- und kostenbedingt weist der Flügelrad-Durchflusssensor eine besondere Eignung für die Messung von Wasservolumina auf.

In einer weiteren bevorzugten Ausgestaltung ist die Vorrichtung zum Anschluss eines Bag-in-Box-Milchbehälters ausgebildet. Bei einem Bag-in-Box-Milchbehälter handelt es sich um ein Behältnis, in dem ein Innenbeutel in einer Außenverpackung befindlich ist und durch diese gestützt wird. Der Vorteil des Einsatzes von Bag-in-Box-Milchbehältern betrifft Hygieneaspekte durch den möglichen Austausch von Behältern in Fällen von ungenießbar gewordener Milch. Die Verwendung von Einweg-Bag-In-Box-Milchbehältern kann ebenso vorteilhaft sein, da derartige Behälter nicht gereinigt werden müssen und eine gegebenenfalls ungenügende Reinigung sich somit auch nicht auf die Getränkequalität niederschlagen kann.

Bei einem Bag-in-Box-Milchbehälter wird die Milch ohne Luft gelagert, sodass diese länger frisch bleibt. Für die entnommene Milch strömt keine Luft, sondern der flexible Innenbehälter kollabiert langsam. Ein weiterer Aspekt der vorliegenden Erfindung betrifft hierbei den sogenannten Leermeldesensor, also den Sensor, der der Steuerung meldet, dass der Milchbehälter leer ist und keine Milch mehr gefördert werden kann. Bei herkömmlichen Getränkeautomaten wird dieser Leermeldesensor durch eine Lichtschranke realisiert, welche statt der zur Neige gehenden Milch angesaugte Luftblasen detektieren. Eine solche Lichtschranke würde jedoch bei einem Bag-in-Box-Milchbehälter nicht funktionieren, da keine Luft nachströmen kann und sich auch bei einem leeren Milchbehälter, wenn also die Milchpumpe einen Unterdruck im Milchbehälter erzeugt, noch Milchreste in der Förderleitung befinden.

Die vorliegende Erfindung schafft hierfür Abhilfe, indem statt einer Lichtschranke der erfindungsgemäße Durchflussmesser in zusätzlicher Funktion auch als Leermeldesensor verwendet wird. Im Gegensatz zu Lichtschranken gibt der Durchflussmesser entsprechend seiner Funktionsweise Messsignale aus, die nicht nur die Anwesenheit, sondern die Durchflussgeschwindigkeit des Milchvolumens repräsentieren. Ein unbewegtes Milchvolumen mit der Geschwindigkeit nahe oder gleich null kann durch ihn folglich erkannt und einem Leerzustand zugeordnet werden, da ein fehlender Strom den Messaufnehmer nicht betätigt. Ist die Milchpumpe also eingeschaltet und es wird kein Volumenstrom durch den ersten Durchflussmessererfasst, so kann gefolgert werden, dass der Milchbehälter leer ist und in der Steuerung kann ein entsprechendes Leermeldesignal erzeugt werden. Der Leerzustand kann dem Bediener daraufhin durch die Getränkezubereitungsvorrichtung signalisiert werden.

In einer weiteren bevorzugten Ausgestaltung der Vorrichtung befindet sich eine Luftzuleitung saugseitig der Milchpumpe und mündet in die Förderleitung ein. Diese Luftzuleitung kann für die Erzeugung von Milchschaum verwendet werden. Dabei kann in der Luftzuleitung eine Ventilvorrichtung vorgesehen sein, die vor oder während der Förderung von Milch angesteuert wird, um Luft in das Milchsystem zu lassen. Zudem kann die Luftzuleitung alleine oder wirkverbunden mit anderen Komponenten wie Druckerhöhungselementen, Mischern oder der Milchpumpe zur Milchschaumbildung dienen. Druckerhöhungselemente können als Drossel oder als Teil von Mischkomponenten wie Wendelmischern ausgeführt sein. Besondere Pumpenbauformen, wie Zahnradpumpen begünstigen die Bildung von Schaum zusätzlich. Eine Regelung der Luftmenge kann durch ein getaktetes Öffnen und Schließen einer Ventilvorrichtung erfolgen, indem das Tastverhältnis, also das Verhältnis der Öffnungszeit pro Taktzyklus verändert wird. Ebenso kann die Luftzufuhr über den Druck oder die Fließgeschwindigkeit im Milchsystem gesteuert sein und Luft dementsprechend infolge eines Über- und/oder Unterdrucks in die Förderleitung gebracht werden.

In einer weiteren vorteilhaften Ausgestaltung der Vorrichtung ist ein Drainageventil zum Ablassen von Milch druckseitig der Milchpumpe über eine Ausgabeleitung mit einem Getränkeauslass verbunden. Über dieses können zur Durchführung eines Spülvorgangs Spülwasser und gegebenenfalls Milch oder Milchschaumreste in einen Ablauf geleitet werden. Das Drainageventil kann gemeinsam mit einem Spülvorgang zur Verbesserung der Hygiene bei der Getränkezubereitung dienen. Der Spülvorgang kann unter Verwendung des Drainageventils bedarfsweise durchgeführt werden, z.B. nach andauerndem Stillstand der Getränkezubereitungsvorrichtung oder nach Verwendung von Reinigungsmitteln im Wasser- und/oder Milchsystem, die vor der Getränkezubereitung herausgespült werden müssen. Ebenso kann das Drainageventil dafür verwendet werden, um Flüssigkeitsreste nach der Zubereitung oder vor dem Transport der Getränkezubereitungsvorrichtung abzulassen.

Bei dem erfindungsgemäßen Verfahren zur Zubereitung von Kaffee-, Tee- oder Milchgetränken erfolgt eine portionsweise Getränkeausgabe in ein Trinkgefäß und Zugabe von Milch und/oder Milchschaum zu dem Getränk, indem aus einem Milchbehälter über eine Förderleitung Milch in Richtung eines Getränkeauslasses gefördert wird. Es ist hierbei vorgesehen, dass zur Dosierung der ausgegebenen Milchmenge mit Hilfe eines Durchflussmessers das über die Förderleitung geförderte Milchvolumen bestimmt wird.

Zur Getränkezubereitung kann zusätzlich über ein Wasserfördersystem Frischwasser und/oder Heißwasser in Richtung des Getränkeauslasses gefördert werden, beispielsweise zur Zubereitung frisch gebrühten Kaffees. Ein zweiter, im Wasserfördersystem vorgesehener Durchflussmessers dient dabei zur Volumenbestimmung des geförderten Wassers. Bei dem erfindungsgemässen Verfahren wird das Wasserfördersystem zur anschließenden Durchführung eines Spülvorgangs über ein Spülventil mit dem Milchsystem verbunden. Dabei sind der erste und der zweite Durchflussmesser hydraulisch in Reihe geschalte, Im Rahmen dieses Spülvorgangs wird erfindungsgemäß ein Abgleich des ersten Durchflussmessers auf Messwerte des zweiten Durchflussmessers durchgeführt.

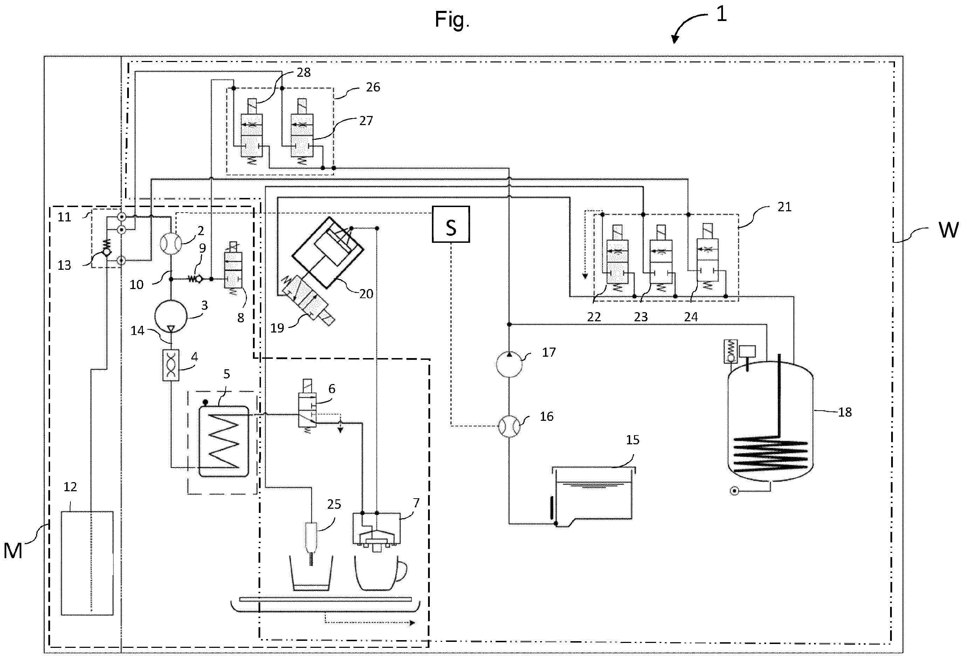

Ein Ausführungsbeispiel der Erfindung wird nachfolgend unter Bezugnahme auf die Zeichnung näher erläutert.

Die einzige Figur zeigt ein Wasserlaufschema einer Getränkezubereitungsvorrichtung

Das in der Figur dargestellte Wasserlaufschema weist ein Milchsystem M einer Getränkezubereitungsvorrichtung 1 auf, das einen Durchflussmesser 2, eine Milchpumpe 3, ein Druckerhöhungselement 4, eine Temperiereinheit für Milch oder Milchschaum 5, ein Drainageventil 6, einen Getränkeauslass 7 sowie ein Luftventil 8 auf. Das Luftventil 8 ist über ein Rückschlagventil 9 mit der Förderleitung 10 verbunden ist. Die Förderleitung 10 verbindet die saugseitigen Komponenten des Milchsystems M miteinander. Sie ist verbunden mit einem Anschluss 11, an den ein Milchbehälter 12 an das Milchsystem M angeschlossen ist. Am Anschluss 11 befindet sich ein Anschlussrückschlagventil 13. Die Ausgabeleitung 14 ist druckseitig mit der Milchpumpe 3 verbunden und bildet eine fluidleitende Verbindung der dort angeordneten Komponenten des Milchsystems M.

Bei der Zubereitung von milchhaltigen Getränken fördert die Milchpumpe 3 Milch aus dem Milchbehälter 12 über die Förderleitung 10 und den Anschluss 11. Dabei durchströmt die Milch den Durchflussmesser 2 sowie die Milchpumpe 3. Eine Antriebseinheit, die die Milchpumpe 3 antreibt, ist nicht als solche dargestellt und im dargestellten Ausführungsbeispiel als Teil der Milchpumpe 3 anzusehen.

Der Durchflussmesser 2 ist als Turbinen-Durchflussmesser ausgeführt und steht signaltechnisch in Verbindung mit einer Steuereinheit S. Der Durchflussmesser 2 dient dazu, das geförderte Milchvolumen zu bestimmen und somit die Ausgabe der für ein gewähltes Getränk jeweils vorgegebenen bzw. gewünschten Milchmenge zu steuern.

Saugseitig der Milchpumpe 3 ist das Luftventil 8 über das Rückschlagventil 9 mit der Förderleitung 10 verbunden. Die Milch bzw. das Milch-Luft-Gemisch werden durch die Milchpumpe 3 gefördert. Durch das Einleiten von Luft in die Ansaugleitung wird in der Milchpumpe 3 aus dem angesaugten Milch-Luftgemisch ein Milchschaum erzeugt. Das Aufschäumen des Milch-Luftgemisches in der Milchpumpe 3 funktioniert nach Erfahrungen der Anmelderin am besten, wenn als Milchpumpe 3 eine Zahnradpumpe verwendet wird. Außerdem wird zur Schaumerzeugung ein erhöhter Druck in der Milchpumpe 3 benötigt. Hierzu dient das druckseitig an die Pumpe angeschlossene Druckerhöhungselement 4. Dieses kann als Strömungswiderstand in Form einer Drossel aber auch als Mischer, insbesondere als Wendelmischer ausgeführt sein.

Eine Temperiereinheit 5 - etwa ein Durchlauferhitzer oder Thermoblock - für Milch und/oder Milchschaum ist optional im Milchsystem angeordnet. Diese kann auf verschiedenen Wirkprinzipien beruhen und die Temperatur der Milch oder des Milchschaums in Abhängigkeit der Zubereitungsart auf eine Nenntemperatur oder einen Temperaturbereich bringen. Mögliche Ausführungsformen sind hierbei Wärmetauscher mit aktiven Heiz-/Kühlelementen oder passiven Heiz-/Kühlelementen, die gegebenenfalls die Betriebstemperatur anderer Komponenten der Getränkezubereitungsvorrichtung nutzen.

Das Drainageventil 6 ist als 3/2-Wegventil ausgeführt, dessen Ausgangsanschlüsse mit einem Ablauf sowie dem Getränkeauslass 7 verbunden sind. Zur Ausgabe von Milch oder Milchschaum befindet sich das Drainageventil 6 in einer Stellung, die einen Strömungsweg zum Getränkeauslass 7 freigibt. Eine alternative Schaltstellung des Drainageventils 6 verbindet die Ausgabeleitung 14 mit dem Ablauf. Dadurch können Milch- oder Milchschaumreste aus dem Milchfördersystem M entfernt werden.

Der Milchbehälter 12 dient der Aufbewahrung von Milch und ist als Bag-In-Box-Milchbehälter ausgeführt. Dieser besteht aus einem Milchbeutel, welcher durch eine Umhausung wie etwa einen Karton oder einen Rahmen gestützt wird. Der Bag-In-Box-Milchbehälter 12 ist über den Anschluss 11 mit der Förderleitung 10 verbunden. Das Rückschlagventil 13 am Anschluss 12 verhindert einen Rückfluss von Milch in den Bag-In-Box-Milchbehälter und gibt in Förderrichtung den Milchfluss frei.

Aufgrund der Ausführung des Milchbehälters 12 als Bag-In-Box-Milchbehälter zieht sich der Milchbeutel mit zunehmender Milchentnahme infolge des Unterdruckes, der durch die Milchpumpe 3 erzeugt wird, zusammen. Wird die Milchpumpe 3 bei leerem Bag-In-Box-Milchbehälter weiter betrieben, so wird der Bag-In-Box-Milchbehälter und die Förderleitung 10 so weit komprimiert, wie es die Steifigkeit dieses Teils des Milchsystems zulässt, allerdings findet kein oder nahezu kein Volumenstrom durch die Förderleitung 10 statt. Der Durchflussmesser 2 erfasst in diesem Fall dementsprechend keinen Volumenstrom und gibt dieses Signal an die Steuereinheit S aus. Erkennt die Steuereinheit S zusätzlich, dass die Milchpumpe 3 eingeschaltet ist und entsprechend dem Signal des Durchflussmessers 2 kein oder nahezu kein Volumenstrom stattfindet, so kann die Steuereinheit S ein Signal ausgeben, das durch einen Bediener derart interpretiert werden kann, dass der Bag-In-Box-Milchbehälter auszutauschen oder gegebenenfalls aufzufüllen ist. Der Durchflussmesser 2 dient somit in zusätzlicher Funktion als Leermeldesensor.

Neben dem Milchsystem M weist das in der Figur gezeigte Wasserlaufschema ein Wasserfördersystem W auf. Dieses umfasst einen Wassertank 15, einen Durchflussmesser 16, eine Wasserpumpe 17 und eine Temperiereinheit 18 in Form eines Wasserboilers.

Die Steuereinheit S ist signaltechnisch mit dem Durchflussmesser 16 verbunden, und kann als gemeinsame elektronische Komponente sowohl als des Milchsystems M als auch des Wasserfördersystems W angesehen werden. Die Temperiereinheit 18 ist mit einem Brühventil 19 verbunden, das wiederum mit einer Brühkammer 20 verbunden ist. Von dort führt eine Ausgabeleitung zum Auslauf 7.

Ferner ist die Temperiereinheit 18 mit einer ersten Ventilgruppe 21 verbunden, welche ein Ventil für den Ablass von Wasser 22, ein Ventil 23 für die Ausgabe von Wasser und einem Ventil 24 zur Reinigung umfasst. Das Ventil 23 ist mit einem Wasserauslass 25 verbunden. Das Ventil 24 führt zum Anschluss 11 des Milchsystems M. Die Wasserpumpe 17 ist mit einer zweiten Ventilgruppe 26 verbunden, welche ein erstes Spülventil 27 sowie ein zweites Spülventil 28 umfasst. Das erste Spülventil 27 verbindet das Wasserfördersystem W mit der Förderleitung 10 und mündet eingangsseitig zum Durchflussmesser 2 in das Milchsystem M. Über das zweite Spülventil 28 kann das Wasserfördersystem W mit dem Rückschlagventil 9 sowie dem Luftventil 8 verbunden werden.

Im Betrieb der Getränkezubereitungsvorrichtung fördert die Wasserpumpe 17 Wasser aus dem Wassertank 15. Die Wasserpumpe 17 kann sich von der Milchpumpe 3 in ihrer Ausführungsform unterscheiden. Der Unterschied kann sich durch die unterschiedlichen Anforderungen an die beiden Pumpen ergeben: Während die Wasserpumpe zur Herstellung von Getränken wie Espresso Drücke von bis zu 12 bar aufbringen muss, erfordert das Fördern von Milch und Milchschaum lediglich Drücke von bis zu 4 bar. Daraus ergeben sich unterschiedliche Anforderungen an die Komponenten der Pumpen. Darüber hinaus sind die Pumpen gegebenenfalls auf unterschiedliche Fördermengen ausgelegt, wonach die Wasserpumpe 17 im Vergleich zur Milchpumpe 3 größer oder kleiner gestaltet sein kann.

Bei der Förderung von Wasser aus dem Wassertank 15 durchströmt das geförderte Wasser den Durchflussmesser 16, der als Flügelrad-Durchflussmesser ausgeführt ist. Dieser dient an sich dazu, das geförderte Wasservolumen bei der Ausgabe von Getränken zu messen, um die gewünschte bzw. für ein gewähltes Getränk vorgesehene Wassermenge zu fördern.

Eine fluidleitende Verbindung führt von Wasserpumpe 17 zur Temperiereinheit 18. Die Temperiereinheit 18 ist dabei als Boiler ausgestaltet, sodass ein hinreichend großes Wasservolumen bereits vor der Zubereitung eines Getränks gefördert wird, um es zu temperieren und damit ohne zeitliche Verzögerung für die Getränkezubereitung zur Verfügung zu stellen. Analog zur Temperiereinheit 5 kann die Wirkweise der Temperiereinheit 18 auf aktiven oder passiven Temperierelementen beruhen. Die Temperiereinheit 18 kann durch die Steuereinheit angesteuert werden, um bei Einschalten oder mittels eines Zeitschalters die Förderung von Wasser und eine anschließende Temperierung zu initiieren.

Die Zubereitung eines Getränks kann teilweise oder ganz ohne Milchzugabe erfolgen, indem ein Wasserstrom durch das Brühventil 19 in die Brühkammer 20 gefördert wird. Dafür wird das Brühventil in eine Schaltstellung gebracht, in der der Wasserstrom in die Brühkammer gelangen kann. Die Brühkammer 20 ist für die Zubereitung als durchströmbarer Behälter für Tee, Kaffee oder lösliche Tee-/Kaffeegranulate ausgeführt. Das Getränk wird entweder über einen Getränkeauslass 7 zusammen mit Milch oder Milchschaum ausgegeben, kann aber auch getrennt von dieser, als individuelle Ausgabe erfolgen.

Die Ventilgruppe 21 steht mit der Temperiereinheit 18 derart in Verbindung, dass der Wasserstrom aus der Temperiereinheit 18 für jedes der Ventile 22, 23 und 24 abgezweigt werden kann. Während der Kaffeezubereitung sind, sofern es die gewählte Zubereitungsweise nicht erfordert, die Ventile 22, 23 und 24 in sperrenden Schaltstellungen. Dies ist insbesondere dann relevant, wenn Kaffeegetränke wie Espresso mit einem erhöhten Druck zubereitet werden. Eine räumliche Gruppierung der Elemente als Ventilblock 21 ist nicht zwingend erforderlich, da die Ventile 22, 23, 24 nicht in funktionellem Zusammenhang zueinanderstehen müssen. Die Ansteuerung der Komponenten erfolgt über eine signaltechnische Kommunikation mit der Steuereinheit S, die die Schaltung einzelner oder aller Ventile bewirkt.

Die Verbindung des Ventils 22 zu einem Auslauf erlaubt das Ablassen von Wasser aus einem Wassertank oder der Temperiereinheit, insbesondere für Transport- oder Wartungs- oder Reparaturzwecke. Dafür wird das Ventil 22 in eine öffnende Stellung gebracht.

Die Verbindung des Ventils 23 für die Ausgabe von Wasser zu einem Wasserauslauf 25 erlaubt die Ausgabe von temperiertem Wasser, mit dem Getränke wie Tee auch manuell zubereitet werden können. Eine Ansteuerung des Ventils 23 kann darüber hinaus als Teil der Zubereitung eines Kaffeegetränkes erfolgen. Dabei wird nach Abschluss der Ausgabe von Kaffee Heißwasser in ein Trinkgefäß gegeben.

Über das Ventil 24 kann Heißwasser zum Anschluss 11 des Milchbehälters 12 gefördert werden. Dies dient zur Durchführung eines Reinigungs- oder Spülvorgangs. Dabei wird der Milchbehälter 12 vom Benutzer durch einen Reinigungsbehälter ausgetauscht. Über das Ventil 24 kann dann automatisch Heißwasser zur Reinigung des Systems in den Reinigungsbehälter dosiert werden.

Die Wasserpumpe 17 steht mit der zweiten Ventilgruppe 26 in Verbindung. Entsprechend der Ausführungen zu Ventilgruppe 21 müssen die Ventile der zweiten Ventilgruppe 26 nicht gruppiert sein, sondern können sich an unterschiedlichen räumlichen Positionen befinden.

Das Spülventil 27 verbindet das Milchsystem M mit dem Wasserfördersystem W. Dieses wird für einen Spülvorgang verwendet, bei dem ein Teil der Komponenten des Milchsystems mit kaltem Wassers gespült werden. Wird das Spülventil 27 geöffnet, so ist der Durchflussmesser 2 mit dem Durchflussmesser 16 hydraulisch in Reihe geschaltet. Der Durchflussmesser 2 wird somit vom gleichen Wasservolumen durchströmt, wie der Durchflussmesser 16. Somit kann während eines Spülvorgangs ein messtechnischer Abgleich beider Durchflussmesser durchgeführt werden.

Im Rahmen eines messtechnischen Abgleichs werden von der Steuerung 2 die von den Durchflussmesser 2 und 16 gelieferten Signale jeweils einem entsprechenden Durchflussvolumen zugeordnet. Dies geschieht anhand zuvor in der Steuereinheit S gespeicherter Werte. Unterscheiden sich die von den Durchflussmessern 2 und 16 gemessenen Volumina, so wird ein Korrekturfaktor bestimmt, mit dem die von dem Durchflussmesser 2 gemessenen Volumina korrigiert werden. Dafür wird dieser Korrekturfaktor gespeichert und für den späteren Betrieb des Durchflussmessers 2 bei der Ausgabe und Dosierung von Milch bzw. Milchschaum verwendet.

Das Spülventil 28 erlaubt eine Verbindung des Wasserfördersystems mit dem Milchsystem M. Die von dem Ventil 28 ausgehende Leitung kann dabei derart mit dem Milchsystem M verbunden sein, dass das Rückschlagventil 9 mit einem Wasserstrom durchströmt werden kann.

## Patentansprüche

1. Getränkezubereitungsvorrichtung, insbesondere zur Zubereitung von Kaffee-, Tee- oder Milchgetränken, mit einem Milchsystem (M) zur Ausgabe von Milch und/oder Milchschaum und mit einer Steuereinheit (S) zur Steuerung der Getränkezubereitungsvorrichtung für eine portionsweise Getränkeausgabe, wobei das Milchsystem (M) eine mit einem Milchbehälter (12) verbindbare Förderleitung (10) und eine an die Förderleitung (10) angeschlossene Milchpumpe (3) aufweist,
wobei in der Förderleitung (10) ein erster Durchflussmesser (2), insbesondere mechanischer Durchflussmesser (2), angeordnet ist, welcher zur Dosierung des von der Milchpumpe (3) geförderten Milchvolumens mit der Steuereinheit (S) signaltechnisch verbunden ist,
wobei die Getränkezubereitungsvorrichtung ein Wasserfördersystem (W) zur Förderung von Frischwasser und/oder Heißwasser aufweist und das Wasserfördersystem einen zweiten Durchflussmesser (16) zur Volumenbestimmung von dem Wasserfördersystem geförderten Wassers aufweist,
**dadurch gekennzeichnet, dass** das Wasserfördersystem zur Durchführung eines Spülvorgangs über zumindest ein erstes Spülventil (27) mit dem Milchsystem (M) derart verbindbar ist, dass der erste und der zweite Durchflussmesser (2,16) hydraulisch in Reihe geschaltet sind, wobei die Steuereinheit (S) ausgebildet ist, im Rahmen eines Spülvorgangs einen Abgleich des ersten Durchflussmessers (2) auf Messwerte des zweiten Durchflussmessers (16) durchzuführen.

2. Getränkezubereitungsvorrichtung nach Anspruch 1, bei der der erste Durchflussmesser (2) als Turbinenrad-Durchflussmesser ausgebildet ist.

3. Getränkezubereitungsvorrichtung nach Anspruch 2, bei der der zweite Durchflussmesser (16) als Flügelrad-Durchflussmesser ausgebildet ist.

4. Getränkezubereitungsvorrichtung nach einem der vorangehenden Ansprüche, bei der die Förderleitung (10) des Milchsystems (M) zum Anschluss eines Bag-in-Box-Milchbehälters (12) ausgebildet ist und der erste Durchflussmesser (2) zusätzlich als Leermeldesensor für die Steuereinheit (S) dient.

5. Getränkezubereitungsvorrichtung nach einem der vorangehenden Ansprüche, bei der saugseitig der Milchpumpe (3) eine Luftzuleitung in die Förderleitung einmündet und die Luftzuleitung über ein zweites Spülventil (28) mit dem Wasserfördersystem (W) verbindbar ist.

6. Getränkezubereitungsvorrichtung nach einem der vorangehenden Ansprüche, bei der das Milchsystem (M) druckseitig der Milchpumpe (3) über eine Ausgabeleitung mit einem Getränkeauslass (7) verbunden ist und bei der in der Ausgabeleitung ein Drainageventil (6) angeordnet ist, über welches die Ausgabeleitung zur Durchführung eines Spülvorgangs in einen Ablauf geleitet werden kann.

7. Verfahren zur Zubereitung eines Getränks, insbesondere Kaffee-, Tee- oder Milchgetränks, bei dem eine portionsweise Getränkeausgabe in ein Trinkgefäß erfolgt und dem Getränk Milch und/oder Milchschaum zugegeben wird, indem aus einem Milchbehälter (12) über eine Förderleitung (10) Milch in Richtung eines Getränkeauslasses gefördert wird, wobei zur Dosierung der ausgegebenen Milchmenge mittels eines ersten Durchflussmessers (2) das über die Förderleitung (10) geförderte Milchvolumen bestimmt wird,
wobei zur Getränkezubereitung über ein Wasserfördersystem (W) Frischwasser und/oder Heißwasser in Richtung des Getränkeauslasses gefördert wird und mittels eines zweiten Durchflussmessers (16) eine Volumenbestimmung des geförderten Wassers erfolgt, **dadurch gekennzeichnet, dass** zur anschließenden Durchführung eines Spülvorgangs das Wasserfördersystem (W) über ein Spülventil (27) mit dem Milchsystem (M) verbunden wird, derart, dass der erste und der zweite Durchflussmesser (2,16) hydraulisch in Reihe geschaltet sind, wobei im Rahmen des Spülvorgangs ein Abgleich des ersten Durchflussmessers (2) auf Messwerte des zweiten Durchflussmessers (16) durchgeführt wird.

## Claims

1. Beverage preparation device, especially for preparation of coffee, tea or milk beverages, having a milk system (M) for dispensing milk and/or milk foam and having a control unit (S) for controlling the beverage preparation device for portionwise dispensing of beverages, wherein the milk system (M) has a feed line (10), which is connectible to a milk container (12), and a milk pump (3), which is connected to the feed line (10),
wherein in the feed line (10) there is arranged a first flowmeter (2), especially a mechanical flowmeter (2), which, for metering the milk volume fed by the milk pump (3), is in signalling communication with the control unit (S),
wherein the beverage preparation device has a water feed system (W) for feeding fresh water and/or hot water and the water feed system has a second flowmeter (16) for determining the volume of the water fed by the water feed system,
**characterised in that**
for carrying out a flushing operation, the water feed system is connectible to the milk system (M) via at least one first flushing valve (27) in such a way that the first and second flowmeters (2, 16) are hydraulically connected in series, the control unit (S) being configured to carry out, in the course of a flushing operation, an adjustment of the first flowmeter (2) to measured values of the second flowmeter (16).

2. Beverage preparation device according to claim 1, wherein the first flowmeter (2) is in the form of a turbine flowmeter.

3. Beverage preparation device according to claim 2, wherein the second flowmeter (16) is in the form of an impeller flowmeter.

4. Beverage preparation device according to any one of the preceding claims, wherein the feed line (10) of the milk system (M) is configured for connection of a bag-in-box milk container (12), and the first flowmeter (2) serves additionally as an empty message sensor for the control unit (S).

5. Beverage preparation device according to any one of the preceding claims, wherein an air supply line opens into the feed line on the suction side of the milk pump (3), and the air supply line is connectible to the water feed system (W) via a second flushing valve (28).

6. Beverage preparation device according to any one of the preceding claims, wherein on the pressure side of the milk pump (3) the milk system (M) is connected via a dispensing line to a beverage outlet (7) and wherein in the dispensing line there is arranged a drainage valve (6) via which, for carrying out a flushing operation, the dispensing line can be directed to a drain.

7. Method of preparing a beverage, especially a coffee, tea or milk beverage, wherein a beverage is dispensed portionwise into a drinking vessel and milk and/or milk foam is added to the beverage by feeding milk from a milk container (12) via a feed line (10) in the direction of a beverage outlet, wherein, for metering the amount of milk dispensed, the volume of milk fed via the feed line (10) is determined by means of a first flowmeter (2), and wherein, for preparation of a beverage, fresh water and/or hot water is fed via a water feed system (W) in the direction of the beverage outlet and the volume of the fed water is determined by means of a second flowmeter (16), **characterised in that** for subsequently carrying out a flushing operation, the water feed system (W) is connected to the milk system (M) via a flushing valve (27) in such a way that the first and second flowmeters (2, 16) are hydraulically connected in series, wherein in the course of the flushing operation an adjustment of the first flowmeter (2) to measured values of the second flowmeter (16) is carried out.

## Revendications

1. Dispositif de préparation de boissons, destiné en particulier à la préparation de boissons à base de café, de thé ou de lait, ledit dispositif comprenant un système à lait (M) destiné à distribuer du lait et/ou de la mousse de lait et une unité de commande (S) destinée à commander le dispositif de préparation de boissons afin de distribuer une boissons en portions, le système à lait (M) comportant une conduite de distribution (10) qui peut être reliée à un réservoir de lait (12) et une pompe à lait (3) reliée à la conduite de distribution (10),
un premier débitmètre (2), en particulier un débitmètre mécanique (2), étant disposé dans la conduite de distribution (10) et étant relié par une technique de signal à l'unité de commande (S) afin de doser le volume de lait acheminé par la pompe à lait (3),
le dispositif de préparation de boisson comportant un système de distribution d'eau (W) destiné à acheminer de l'eau froide et/ou de l'eau chaude et le système de distribution d'eau comportant un deuxième débitmètre (16) destiné à déterminer le volume d'eau acheminé par le système de distribution d'eau,
**caractérisé en ce que**, afin d'effectuer un processus de rinçage par le biais d'au moins une première vanne de rinçage (27), le système de distribution d'eau peut être relié au système à lait (M) de manière à relier les premier et deuxième débitmètres (2, 16) hydrauliquement en série, l'unité de commande (S) étant conçue pour effectuer un réglage du premier débitmètre (2) à des valeurs de mesure du deuxième débitmètre (16) au cours d'un processus de rinçage.

2. Dispositif de préparation de boissons selon la revendication 1, dans lequel le premier débitmètre (2) est conçu comme un débitmètre à roue de turbine.

3. Dispositif de préparation de boissons selon la revendication 2, dans lequel le deuxième débitmètre (16) est conçu comme un débitmètre à palettes.

4. Dispositif de préparation de boissons selon l'une des revendications précédentes, dans lequel la conduite de distribution (10) du système à lait (M) est conçue pour relier un réservoir de lait bag-in-box (12) et le premier débitmètre (2) sert en plus de capteur de signalisation de vide destiné à l'unité de commande (S).

5. Dispositif de préparation de boissons selon l'une des revendications précédentes, dans lequel une conduite d'alimentation en air débouche dans la conduite de distribution du côté aspiration de la pompe à lait (3) et la conduite d'alimentation en air peut être reliée au système de distribution d'eau (W) par le biais d'une deuxième vanne de rinçage (28).

6. Dispositif de préparation de boissons selon l'une des revendications précédentes, dans lequel le système à lait (M) est relié du côté sous pression de la pompe à lait (3) à une sortie de boisson (7) par le biais d'une conduite de distribution et dans lequel une vanne de drainage (6) est disposée dans la conduite de distribution et permet de diriger la conduite de sortie dans une évacuation pour effectuer un processus de rinçage.

7. Procédé de préparation d'une boisson, en particulier d'une boisson au café, au thé ou au lait, dans lequel la boisson est distribuée en portions dans un récipient à boire et du lait et/ou de la mousse de lait sont ajoutés à la boisson par acheminement du lait d'un récipient à lait (12) vers une sortie de boisson par le biais d'une conduite de distribution (10), le volume de lait acheminé par le biais de la conduite de distribution (10) étant déterminé au moyen d'un premier débitmètre (2) afin de doser la quantité de lait distribuée, de l'eau froide et/ou de l'eau chaude étant acheminée en direction de la sortie de boisson par le biais d'un système d'alimentation en eau (W) pour la préparation de boissons et le volume d'eau acheminé étant déterminé au moyen d'un deuxième débitmètre (16), **caractérisé en ce que** le système d'alimentation en eau (W) est relié au système de lait (M) par le biais d'une vanne de chasse (27) de telle sorte que les premier et deuxième débitmètres (2, 16) sont reliés hydrauliquement en série, le premier débitmètre (2) étant adapté à des valeurs mesurées du deuxième débitmètre (16) dans le cadre du processus de rinçage.
